# EUROPEAN PATENT SPECIFICATION

(11) **EP 0 981 257 B1**
(45) Date of publication and mention of the grant of the patent: **10.01.2007**
(21) Application number: 99116222.3
(22) Date of filing: 17.08.1999
(51) Int. Cl.: H04Q 7/38, H04L 12/56

(54) **Method for processing random access in mobile communications system**
Verfahren zur Verarbeitung von wahlfreiem Zugriff in einem Mobilkommunikationssystem
Méthode pour le traitement d'accès aléatoire dans un système de communication mobile

(30) Priority: 17.08.1998 KR 9833313
(43) Date of publication of application: 23.02.2000
(60) Divisional application: 06022416.9
(73) Proprietor: LG ELECTRONICS INC., Seoul (KR)
(72) Inventor: Hwang, In Tae, Yongin-shi, Kyonggi-do (KR); Shin, San Rim,, Seocho-gu Seoul 137-724 (KR); Ok, Myoung, Jin, Kwanak-gu, Seoul (KR)
(74) Representative: Turi, Michael

(56) References cited:
- EP-A- 0 681 406
- US-A- 5 461 627
- MICHEL MOULY ET AL: "RR PROCEDURES" 1993 , FR,LASSAY-LES-CHATEAUX, EUROPE MEDIA, PAGE(S) 366-373,424-429-428 XP002063457 * page 367, line 25 - page 369, line 35 *

## Description

### BACKGROUND OF THE INVENTION

### Field of the Invention

The present invention relates to a mobile communications system and, more particularly, to a method for processing a random access in a mobile communications system.

### Discussion of Related Art

Hereinafter, reference will be made in connection with the accompanying drawings as to a description of a method for processing a random access in a mobile communications system according to prior art.

A mobile station attempts a random access to a base station using a random access channel in a random access procedure in order to request the base station for channels.

Here, parameters used for the random access procedure are supplied as information about the system on a broadcasting control channel (BCCH) by the base station.

The mobile station then sets a first timer and continuously generating a random access burst signal at random until an access grant message is received from a layer 3 of the base station.

The reason of this procedure lies in that the mobile station cannot recognize whether the random access burst signal is transmitted to the base station successfully, since it takes much time for the base station to process the random access burst signal and sending the access grant message to the mobile station.

Here, the random access burst signal that the mobile station transmits to the base station contains a mobile ID and channel request information which are generated from the mobile station.

The mobile ID and the channel request information are included in the random access burst signal so that among a plurality of mobile stations transmitting the random access burst signal to the base station, only the mobile station that made random access successfully can receive the access grant message from the mobile station.

Thereafter, the base station processes the random access burst signal received from the mobile station and broadcasting the access grant message to the mobile station.

That is, the base station broadcasts the mobile ID and the information included in the random access burst signal over the access grant message.

The mobile station then compares the mobile ID on the access grant message broadcasted from the base station with the mobile ID of its own. When the mobile ID on the access grant message is identical to that of its own, the random access is considered as successful.

In a case where a plurality of mobile stations has the same mobile ID, the mobile stations performs a contention resolution procedure in a dedicated mode to decide whether the access grant message received is a response to the random access burst signal that they sent to the base station.

The reason that the plural mobile stations has the same mobile ID lies in that the mobile stations generate their mobile ID randomly.

The mobile stations compare information included in the access grant message broadcasted from the base station with information included in the random access burst signal transmitted to the base station by themselves.

If the information included in the access grant message is identical to the information in the random access burst signal, the random access is considered as successful.

In one related art method for processing random access in a mobile communication system disclosed in EP-A-0 681 406, the mobile station requests an uplink channel access utilising a specific time slot and the base station acknowledges the request utilising a specific time slot.

It is also a common practise to have a mobile station repeat a random access to the base station at random for shorter time than is taken for the base station to process the random access signal received from the mobile station and transmit the access grant message to the mobile station. This causes unnecessary power consumption and deterioration of performance in the system.

### SUMMARY OF THE INVENTION

It is therefore an object of the present invention to provide a method for processing a random access in a mobile communication system which reduces unnecessary random accesses during the random access procedure.

According to one aspect of the invention, there is provided a method of processing a random access in a mobile station, according to claim 1.

Other aspects are set fourth in the dependent claims and the following description and drawings.

In the method for processing an random access in a mobile communications system are comprised: the steps sending, at a mobile station, a random access burst signal to a base station during the random access; sending, at the base station, an acknowledge signal ACK indicating reception of the random access burst signal to the mobile station; and interrupting, at the mobile station, the random access and waiting for reception of an access grant message, upon receiving the acknowledge signal ACK.

Here, the random access burst signal comprises a control field for controlling the random access.

The control field includes: a termination indicator region indicating whether the signal is a signal processed at an upper layer or a signal processed at a medium access controller (MAC) sublayer; a command/response indicator region indicating whether the signal is a command or a response; and a not required (negative)/required (positive) region indicating whether the signal is a response request signal or the acknowledge signal ACK according to the command or the response.

The acknowledge signal ACK indicating reception of the random access burst signal is converted to a specified format and transmitted at the MAC sublayer of the base station.

In accordance with another aspect of the present invention, there is provided a method for processing a random access in a mobile communications system including the steps of transitioning, at an MAC sublayer in a mobile station, from an idle mode to a random access mode to convert a random access burst signal to a specified format, and sending the random access burst signal to a base station; converting, at an MAC sublayer in the base station, an acknowledge signal ACK indicating reception of the random access burst signal to a specified format, and sending the acknowledge signal ACK to the mobile station; interrupting, at the MAC sublayer in the mobile station, the random access and transitioning to a wait mode for access grant to wait for an access grant message from the base station, upon receiving the acknowledge signal ACK; and transitioning, at the MAC sublayer in the mobile station, to a dedicated mode to receive a corresponding service, upon receiving the access grant message from the base station.

### BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the principles of the drawings:

In the drawings:
FIGs. 1A and 1B are diagrams illustrating examples of a signal format using a method for processing a random access in a mobile communications system in accordance with the present invention;
FIG. 2 is a diagram illustrating an embodiment of the control field shown in FIGs. 1A and 1B; and
FIG. 3 is a flow chart illustrating a method for processing a random access in a mobile communications system in accordance with the present invention.

### DETAILED DESCRIPTION OF PREFERRED EMBODIMENT

Hereinafter, reference will be made in connection with the accompanying drawings as to a description of a method for processing a random access in a mobile communications system in accordance with a preferred embodiment of the present invention.

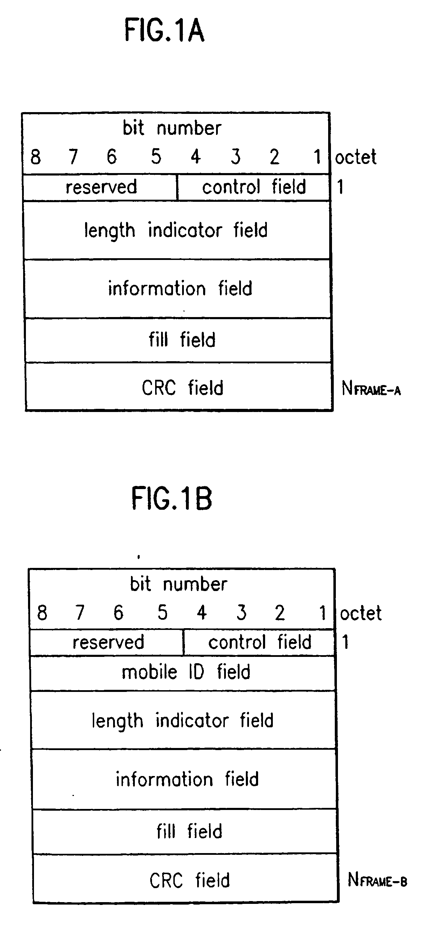

FIGs. 1A and 1B are diagrams illustrating examples of a signal format using a method for processing a random access in a mobile communications system in accordance with the present invention

Referring to FIG. 1A, the signal format comprises reserved field, control field, length indicator field, information field, full field and CRC (Cyclic Redundancy Checking) field. The signal format is used for a broadcast control channel (BCCH), a paging channel (PCH) and a dedicated channel (DCH).

Referring to FIG. 1B, the signal format comprises reserved field, control field, mobile ID field, length indicator field, information field, full field and CRC field. The signal format is used for a reverse access channel (RACH) and a forward access channel (FACH).

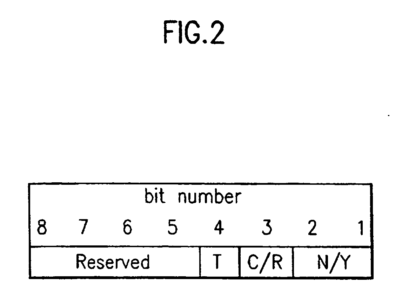

FIG. 2 is a diagram illustrating an example of the control field shown in FIGs. 1A and 1B. The term "bit 4" as used herein represents a termination indicator region, in which "0" indicates that a signal is processed at a higher layer and "1" indicating that the signal is processed at a medium access control (MAC) sublayer.

The term "bit 3" as used herein represents a command/response indicator region, in which "0" indicates a command and "1" indicating a response.

The term "bit 2,1" as used herein represents a not required (negative)/required (positive) region. Here, "00" indicates "response not required" for the command or a negative acknowledge signal NAK for the response, and "11" indicating "response required" for the command and a positive acknowledge signal ACK for the response.

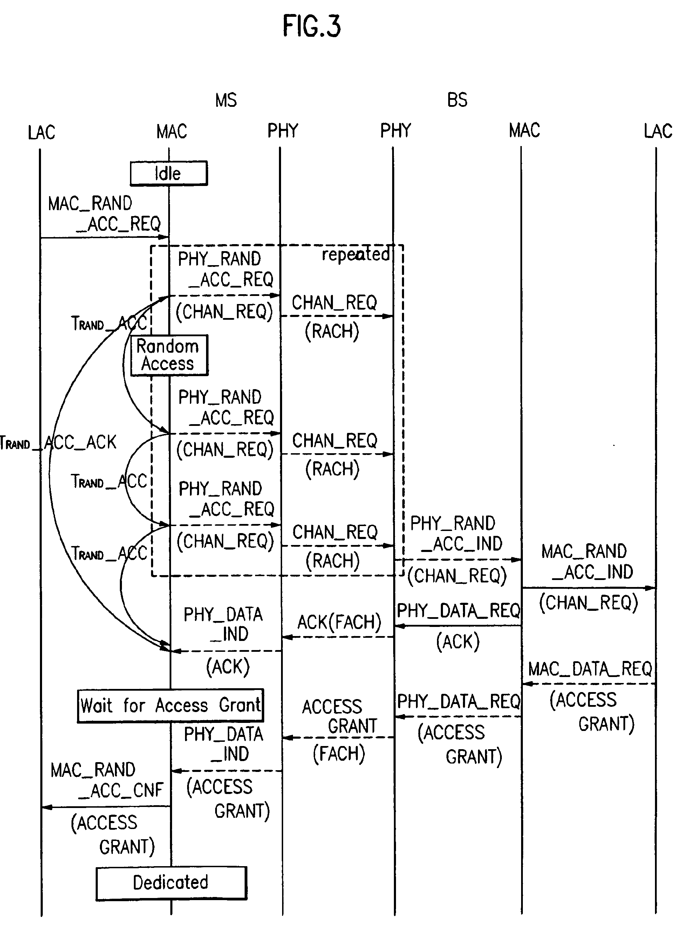

FIG. 3 is a flow chart illustrating an embodiment of a method for processing random access in a mobile communications system according to the present invention.

Now, reference will be made in connection with the accompanying drawings as to a detailed description of the random access processing method in a mobile communications system in accordance with the present invention.

First, in a case where a mobile station layer 3 attempts a random access for channel request to a base station layer 3, a link access controller (LAC) in the mobile station sends a signal MAC_RAND_ACC_REQ with a LAC frame to a MAC supplier according to the signal of the layer 3.

According to the signal MAC_RAND_ACC_REQ, the MAC sublayer transitions from an idle mode to a random access mode to format the signal MAC_RAND_ACC_REQ into the signal format shown in FIG. 1B as includes reserved field, control field, mobile ID field, length indicator field, information field, full field and CRC field. The MAC sublayer sends a signal PHY_RAND_ACC_REQ (CHAN_REQ) with the MAC frame.

Here, the control field in the signal PHY_RAND_ACC_REQ(CHAN_REQ) is formatted as illustrated in FIG. 2.

In the control field, the termination indicator region, bit 4 has "0" indicating that the signal is processed at the higher layer, the command/response indicator region, bit 3 "0" indicating a command, and the not required (negative)/required (positive) region, bits 2,1 "11" indicating a response required.

The number randomly generated from the mobile station is formatted in the mobile ID field and information about the layer 3, i.e., channel request information is formatted in the information field.

The MAC sublayer formats the mobile ID of its own in the mobile ID field, the length of the information field in the length indicator field, information about the layer 3 in the information field, and the full field and the CRC field into a signal PHY_RAND_ACC_REQ(CHAN_REQ). The MAC sublayer sets first and second timers T_{RAND}_ACC and T_{RAND}_ACC_ACK and sending them to a PHY layer through the MAC frame.

The first timer T_{RAND}_ACC is used to perform the random access at random. The second timer T_{RAND}_ACC_ACK is used to prevent the mobile station performing the random access unlimitedly according to the first timer T_{RAND_}ACC before the mobile station receives an ACK signal from the base station in response to the random access burst signal.

The PHY layer processes the signal PHY_RAND_ACC_REQ(CHAN_REQ) transferred from the MAC sublayer into a signal CHAN_REQ and sending the signal CHAN_REQ to the base station through a reverse access channel (RACH).

The base station then examines the random access burst signal transmitted from the mobile station through the reverse access channel (RACH). If there is no error in the random access burst signal, the base station sends an acknowledge signal ACK and an access grant message to the mobile station. With an error in the random access burst signal, the base station sends a negative acknowledge signal NAK to the mobile station to request the random access burst signal again.

That is, the base station PHY layer processes the random access burst signal CHAN_REQ received from the PHY layer at the mobile station into a signal PHY_RAND_ACC_IND(CHN_REQ) and sending the signal PHY_RAND_ACC_IND(CHN_REQ) to the MAC sublayer with the MAC frame.

The MAC sublayer examines the control field in the signal PHY_RAND_ACC_IND(CHN_REQ) and recognizing that the signal PHY_RAND_ACC_IND(CHN_REQ) is a response-required (from "11" of the not required (negative)/required (positive) region) command (from "0" of the command/response indicator region) processed at the higher layer (from "0" of the termination indicator region).

The MAC sublayer also recognizes the mobile ID from the mobile ID field in the signal PHY_RAND_ACC_IND(CHN_REQ) and information about the layer 3 of the mobile station from the information field. The MAC sublayer examines the CRC field in the signal PHY_RAND_ACC_IND(CHN_REQ) to determine whether there is an error in the random access burst.

Without an error in the random access burst signal, the MAC sublayer formats the control field of a signal PHY_DATA_REQ(ACK) as illustrated in FIG. 1B and processing the signal through the PHY layer. The MAC sublayer then transmits an acknowledge signal ACK to the mobile station on a forward access channel (FACH), thereby indicating that the base station received the random access burst signal successfully. The MAC sublayer also processes the information of the information field into a signal MAC_RAND_ACC_IND(CHAN_REQ) and sending the signal to the LAC with the MAC frame.

If there is an error in the random access burst signal, the MAC sublayer formats the control field of the signal PHY_DATA_REQ(ACK) as illustrated in FIG. 1B and processing the signal through the PHY layer. The MAC sublayer then transmits the processed signal to the mobile station on the forward access channel (FACH) as a signal requesting the mobile station to transmit the random access burst signal again.

That is, in a case where there is no error in the random access burst signal, the base station MAC sublayer formats the control field in the signal PHY_DATA_REQ(ACK). Here, the termination indicator region, bit 4 has "1", the command/response indicator region, bit 3 "1", and the not required (negative)/required (positive) region, bit 2,1 "11" indicating an acknowledge signal ACK for the response, bit 3. The MAC sublayer also formats the mobile ID field in the signal PHY_DATA_REQ(ACK) to indicate the mobile ID as determined above and the information field to indicate information about the mobile station layer 3. The formatted signal PHY_DATA_REQ(ACK) is transmitted to the PHY layer with the MAC frame.

The PHY layer processes the signal PHY_DATA_REQ(ACK) and sending the acknowledge signal ACK to the mobile station on the forward access channel (FACH).

Thereafter, the mobile station resets the first and second timers T_{RAND}_ACC and T_{RAND}_ACC_ACK according to the acknowledge signal ACK received from the base station on the forward access channel (FACH) to interrupt the random access. The mobile station examines the acknowledge signal ACK and performing a corresponding operation.

That is, the mobile station PHY layer processes the acknowledge signal ACK received from the base station on the forward access channel (FACH) and sending a signal PHY_DATA_IND(ACK) to the MAC sublayer with the MAC frame.

The MAC sublayer then examines the control field in the signal PHY_DATA_IND(ACK) and recognizing that the signal PHY_DATA_IND(ACK) is an acknowledge signal ACK indicating a response processed at the MAC sublayer. The MAC sublayer also recognizes the mobile ID and the information about the mobile station from the mobile ID field and the information field in the signal PHY_DATA_IND(ACK).

The MAC sublayer compares the mobile ID recognized from the acknowledge signal ACK with the mobile ID of its own. When the mobile ID recognized from the acknowledge signal ACK is identical to the mobile ID of its own, the MAC sublayer performs a contention resolution procedure to compare the information recognized from the acknowledge signal ACK with the information of its own.

When the information recognized from the acknowledge signal ACK is identical to the information of its own, the MAC sublayer transitions from the random access mode to a wait mode for access grant.

On the other hand, if there is an error in the random access burst signal, the MAC sublayer at the base station formats the control field of the negative acknowledge signal NAK. Here, the termination indicator region, bit 4 has "1" indicating that the signal is processed at the MAC sublayer, the command/response indicator region, bit 3 "1" indicating a response, and the not required (negative)/required (positive) region, bit 2,1 "00" indicating a negative acknowledge signal NAK for the response, bit 3. The MAC sublayer also formats the mobile ID field in the signal PHY_DATA_REQ(NAK) to indicate the mobile ID as determined above and the information field to indicate information about the mobile station layer 3. The signal PHY_DATA_REQ(NAK) thus formatted is sent to the PHY layer with the MAC frame.

The PHY layer processes the signal PHY_DATA_REQ(NAK) and sending the negative acknowledge signal NAK to the mobile station on the forward access channel (FACH).

Thereafter, the mobile station resets the first and second timers T_{RAND}_ACC and T_{RAND}_ACC_ACK according to the negative acknowledge signal NAK received from the base station on the forward access channel (FACH) to interrupt the random access. The mobile station examines the negative acknowledge signal NAK and performing a corresponding operation.

That is, the PHY layer at the mobile station processes the negative acknowledge signal NAK received from the base station on the forward access channel (FACH) and sending a signal PHY_DATA_IND(NAK) to the MAC sublayer through the MAC frame.

Then, the MAC sublayer examines the control field in the signal PHY_DATA_IND(NAK) and recognizing that the signal PHY_DATA_IND(NAK) is a negative acknowledge signal NAK indicating a response processed at the MAC sublayer. The MAC sublayer also recognizes the mobile ID and the information about the mobile station from the mobile ID field and the information field in the signal PHY_DATA_IND(NAK).

The MAC sublayer sets the first and second timers according to the negative acknowledge signal NAK and sending the random access burst to the mobile station again.

On the other hand, in a case where there is no error in the random access burst signal, the LAC at the base station sends the information about the mobile station to the upper layer according to the signal MAC_RAND_ACC_IND(CHAN_REQ) received from the MAC sublayer and sending a signal MAC_DATA_REQ(ACCESS_GRANT) processed at the upper layer to the MAC sublayer.

The MAC sublayer then processes the signal MAC_DATA_REQ(ACCESS_GRANT) received from the LAC into a signal PHY_DATA_REQ(ACCESS_GRANT) and sending the signal PHY_DATA_REQ(ACCESS_GRANT) to the PHY layer through the MAC frame.

The PHY layer processes the signal PHY_DATA_REQ(ACCESS_GRANT) received from the MAC sublayer into a signal ACCESS_GRANT and sending the signal ACCESS_GRANT to the mobile station on the forward access channel (FACH).

Then, the mobile station in the wait mode for access grant transitions to a dedicated mode according to the signal ACCESS_GRANT received from the base station on the forward access channel (FACH) and receiving the corresponding service from the base station.

That is, the PHY layer at the mobile station processes the signal ACCESS_GRANT received from the base station and sending the resulting signal PHY_DATA_IND(ACCESS_GRANT) to the MAC sublayer. The MAC sublayer transmits a signal MAC_RAND_ACC_CNF(ACCESS_GRANT) to the LAC through the MAC frame according to the signal PHY_DATA_IND(ACCESS_GRANT) received from the PHY layer. The MAC sublayer transitions to the dedicated mode to receive the corresponding service from the base station.

As described above, in the random access processing method in a mobile communications system according to the present invention, the base station immediately transmits an acknowledge signal ACK in response to the random access signal received from the mobile station so that the mobile station does not attempt unnecessary random accesses, thereby reducing power consumption and enhancing efficiency of the system.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A method of processing a random access for a mobile station (MS), comprising:
a) the mobile station (MS) performing a random access repeatedly wherein a random access signal (CHAN_REQ) is sent to a base station (BS) during the random access;
b) preventing the mobile station (MS) from performing the random access unlimitedly upon receiving, from the base station (BS), an acknowledge signal (ACK) indicating reception of the random access signal (CHAN_REQ) thereby giving the base station (BS) the time to process the random access signal (CHAN_REQ); and
c) receiving from the base station (BS), an access grant message (ACCESS GRANT) after the base station (BS) has processed the random access signal (CHAN_REQ).

2. The method as claimed in claim 1, wherein the acknowledge signal (ACK) comprises information indicating reception of the random access signal (CHAN_REQ) without access grant information for granting a channel for traffic.

3. The method as claimed in claim 1, further comprising the steps of:
receiving an access grant message from the base station (BS); and transitioning to a dedicated mode to receive a
corresponding service, on receiving the access grant message from the base station (BS).

4. The method as claimed in claim 1, wherein the random access signal (CHAN_REQ) comprises at least a control field and wherein the control field comprises:
a termination indicator region (T) indicating whether the signal is a signal processed at an upper layer or a signal processed at the layer lower than layer 3 of the base station (BS);
a command/response indicator region (C/R) indicating whether the signal is a command or a response; and
a not required/required region (N/Y) indicating whether the signal is a response request signal or a signal indicating reception of the random access signal (CHAN_REQ) from the base station (BS) according to the command or the response.

5. The method according to claim 1, further comprising:
transmitting, at the mobile station (MS), the random access signal (CHAN_REQ) to the base station (BS) at least once;
transmitting, at the base station (BS), the acknowlegde signal (ACK) indicating reception of the random access signal (CHAN_REQ) to the mobile station (MS); and
ceasing, at the mobile station (MS), transmissions of further random access signals (CHAN_REQ) upon receiving the acknowledge signal (ACK), wherein the acknowledge signal (ACK) is processed at one of the medium access control layer (MAC) and the physical layer (PHY) of the base station (BS).

6. The method as claimed in claim 5, wherein the acknowledge signal (ACK) comprises information indicating reception of the random access signal (CHAN-REQ) without access grant information for granting a channel for traffic.

7. The method as claimed in claim 5, further comprising the steps of:
transmitting, at the base station (BS), at least a access grant message; and
transitioning, at the mobile station (MS), to a dedicated mode to receive a corresponding service, on receiving the access grant message from the base station (BS).

8. The method as claimed in claim 5, wherein the random access signal (CHAN-REQ) comprises at least a control field and wherein the control field comprises:
a termination indicator region (T) indicating whether the signal is a signal processed at an upper layer or a signal processed at the layer lower than layer 3 of the base station (BS);
a command/response indicator region (C/R) indicating whether the signal is a command or a response; and
a not required/required region (N/Y) indicating whether the signal is a response request signal or a signal indicating reception of the random access signal (CHAN-REQ) from the base station (BS) according to the command or the response.

9. The method as claimed in claim 5, wherein the signal indicating reception of the random access signal from the base station (BS) is converted to a specific format.

## Patentansprüche

1. Verfahren zur Verarbeitung eines wahlfreien Zugriffs für eine Mobilstation (MS), das umfasst:
a) die Mobilstation (MS) führt wiederholt einen wahlfreien Zugriff durch, wobei ein Signal für wahlfreien Zugriff (CHAN_REQ) während des wahlfreien Zugriffs zu einer Basisstation (BS) gesendet wird;
b) Verhindern, dass die Mobilstation (MS) unbeschränkt den wahlfreien Zugriff durchführt, bei Empfang eines Bestätigungssignals (ACK), das den Empfang des Signals für wahlfreien Zugriff (CHAN_REQ) angibt, von der Basisstation (BS), wodurch der Basisstation (BS) die Zeit gegeben wird, das Signal für wahlfreien Zugriff (CHAN_REQ) zu verarbeiten; und
c) Empfangen einer Zugriffsfreigabenachricht (ACCESSGRANT) von der Basisstation (BS), nachdem die Basisstation (BS) das Signal für wahlfreien Zugriff (CHAN_REQ) verarbeitet hat.

2. Verfahren nach Anspruch 1, bei dem das Bestätigungssignal (ACK) Information umfasst, die einen Empfang des Signals für wahlfreien Zugriff (CHAN_REQ) ohne Zugriffsfreigabeinformation zur Freigabe eines Kanals für Datenverkehr angibt.

3. Verfahren nach Anspruch 1, ferner die Schritte umfassend:
Empfangen einer Zugriffsfreigabenachricht von der Basisstation (BS); und
Übergehen in eine speziell vorgesehene Betriebsart, um einen entsprechenden Dienst beim Empfang der Zugriffsfreigabenachricht von der Basisstation (BS) zu erhalten.

4. Verfahren nach Anspruch 1, bei dem das Signal für wahlfreien Zugriff (CHAN_REQ) wenigstens ein Steuerfeld umfasst, und bei dem das Steuerfeld umfasst:
einen Abbruchangabebereich (T), der angibt, ob das Signal ein in einer oberen Schicht verarbeitetes Signal oder ein Signal ist, das in der Schicht niedriger als die Schicht 3 der Basisstation (BS) verarbeitet wurde;
einen Steuerbefehl/Antwortangabebereich (C/R), der angibt, ob das Signal ein Steuerbefehl oder eine Antwort ist; und
einen Nichterforderlich/Erforderlich-Bereich (N/Y), der angibt, ob das Signal ein Antwortanfragesignal oder ein Signal ist, das den Empfang des Signals für wahlfreien Zugriff (CHAN_REQ) von der Basisstation (BS) gemäß dem Steuerbefehl oder der Antwort gemäß.

5. Verfahren nach Anspruch 1, ferner umfassend:
Übertragen des Signals für wahlfreien Zugriff (CHAN_REQ) bei der Mobilstation (MS) wenigstens einmal zu der Basisstation (BS);
Übertragen des Bestätigungssignals (ACK), das den Empfang des Signals für wahlfreien Zugriff (CHAN_REQ) angibt, an der Basisstation (BS) zu der Mobilstation (MS); und
Beenden aller Übertragungen von weiteren Signalen für wahlfreien Zugriff (CHAN_REQ) bei der Mobilstation (MS) bei Empfang des Bestätigungssignals (ACK), wobei das Bestätigungssignal (ACK) in einer der Medienzugriffssteuerschicht (MAC) und der physikalischen Schicht (PHY) der Basisstation (BS) verarbeitet wird.

6. Verfahren nach Anspruch 5, bei dem das Bestätigungssignal (ACK) Information umfasst, die den Empfang des Signals für wahlfreien Zugriff (CHAN_REQ) ohne Zugriffsfreigabeinformation zur Freigabe eines Kanals für Datenverkehr angibt.

7. Verfahren nach Anspruch 5, ferner die Schritte umfassend:
Übertragen von wenigstens einer Zugriffsfreigabenachricht bei der Basisstation (BS); und
Übergehen in eine speziell vorgesehene Betriebsart bei der Mobilstation (MS), um einen entsprechenden Dienst beim Empfang der Zugriffsfreigabenachricht von der Basisstation (BS) zu erhalten.

8. Verfahren nach Anspruch 5, bei dem das Signal für wahlfreien Zugriff (CHAN_REQ) wenigstens ein Steuerfeld umfasst, und bei dem das Steuerfeld umfasst:
einen Abbruchangabebereich (T), der angibt, ob das Signal ein in einer oberen Schicht verarbeitetes Signal oder ein Signal ist, das in der Schicht niedriger als die Schicht 3 der Basisstation (BS) verarbeitet wurde;
einen Steuerbefehl/Antwortangabebereich (C/R), der angibt, ob das Signal ein Steuerbefehl oder eine Antwort ist; und
einen Nichterforderlich/Erforderlich-Bereich (N/Y), der angibt, ob das Signal ein Antwortanfragesignal oder ein Signal ist, das den Empfang des Signals für wahlfreien Zugriff (CHAN_REQ) von der Basisstation (BS) gemäß dem Steuerbefehl oder der Antwort angibt.

9. Verfahren nach Anspruch 5, bei dem das Signal, das den Empfang des Signals für wahlfreien Zugriff von der Basisstation (BS) angibt, in ein spezielles Format umgewandelt wird.

## Revendications

1. Procédé de traitement d'un accès aléatoire pour une station mobile (MS), consistant à :
a) procéder à l'exécution par la station mobile (MS) d'un accès aléatoire de façon répétée, dans lequel un signal d'accès aléatoire (CHAN_REQ) est envoyé à une station de base (BS) au cours de l'accès aléatoire ;
b) empêcher la station mobile (MS) d'exécuter l'accès aléatoire de façon illimitée lors de la réception, à partir de la station de base (BS), d'un signal d'accusé de réception (ACK) indiquant la réception du signal d'accès aléatoire (CHAN_REQ), donnant ainsi à la station de base (BS) le temps de traiter le signal d'accès aléatoire (CHAN_REQ) ; et
c) recevoir, de la station de base (BS), un message d'autorisation d'accès (ACCESS GRANT) une fois que la station de base (BS) a traité le signal d'accès aléatoire (CHAN_REQ).

2. Procédé selon la revendication 1, dans lequel le signal d'accusé de réception (ACK) comprend des informations indiquant la réception du signal d'accès aléatoire (CHAN_REQ) sans information d'autorisation d'accès pour accorder un canal pour le trafic.

3. Procédé selon la revendication 1, comprenant en outre les étapes consistant à :
recevoir un message d'autorisation d'accès de la station de base (BS) ; et
passer à un mode privilégié pour recevoir un service correspondant, lors de la réception du message d'autorisation d'accès provenant de la station de base (BS).

4. Procédé selon la revendication 1, dans lequel le signal d'accès aléatoire (CHAN_REQ) comprend au moins un champ de commande et dans lequel le champ de commande comprend :
une région d'indicateur de fin (T) indiquant si le signal est un signal traité au niveau d'une couche supérieure ou bien un signal traité au niveau d'une couche inférieure à la couche 3 de la station de base (BS) ;
une région d'indicateur de commande/réponse (C/R) indiquant si le signal est une commande ou une réponse ; et
une région non nécessaire/nécessaire (N/Y) indiquant si le signal est un signal de demande de réponse ou un signal indiquant la réception du signal d'accès aléatoire (CHAN_REQ) provenant de la station de base (BS) selon la commande ou la réponse.

5. Procédé selon la revendication 1, consistant en outre à :
émettre, au niveau de la station mobile (MS), le signal d'accès aléatoire (CHAN_REQ) vers la station de base (BS) au moins une fois ;
émettre, au niveau de la station de base (MS), le signal d'accusé de réception (ACK) indiquant la réception du signal d'accès aléatoire (CHAN_REQ) vers la station mobile (MS) ; et
faire cesser, au niveau de la station mobile (MS), les émissions d'autres signaux d'accès aléatoires (CHAN_REQ) lors de la réception du signal d'accusé de réception (ACK), dans lequel le signal d'accusé de réception (ACK) est traité au niveau de l'une de la sous-couche de contrôle d'accès au support (MAC) et de la couche physique (PHY) de la station de base (BS).

6. Procédé selon la revendication 5, dans lequel le signal d'accusé de réception (ACK) comprend des informations indiquant la réception du signal d'accès aléatoire (CHAN_REQ) sans information d'autorisation d'accès pour accorder un canal pour le trafic.

7. Procédé selon la revendication 5, comprenant en outre les étapes consistant à :
émettre, au niveau de la station de base (MS), au moins un message d'autorisation d'accès ; et
passer, au niveau de la station mobile (MS), à un mode privilégié pour recevoir un service correspondant, lors de la réception du message d'autorisation d'accès à partir de la station de base (BS).

8. Procédé selon la revendication 5, dans lequel le signal d'accès aléatoire (CHAN_REQ) comprend au moins un champ de commande et dans lequel le champ de commande comprend :
une région d'indicateur de fin (T) indiquant si le signal est un signal traité au niveau d'une couche supérieure ou un signal traité au niveau d'une couche inférieure à la couche 3 de la station de base (BS) ;
une région d'indicateur de commande/réponse (C/R) indiquant si le signal est une commande ou une réponse ; et
une région non nécessaire/nécessaire (N/Y) indiquant si le signal est un signal de demande de réponse ou un signal indiquant la réception du signal d'accès aléatoire (CHAN_REQ) provenant de la station de base (BS) selon la commande ou la réponse.

9. Procédé selon la revendication 5, dans lequel le signal indiquant la réception du signal d'accès aléatoire provenant de la station de base (BS) est converti à un format spécifique.
